# EUROPEAN PATENT SPECIFICATION

(11) **EP 3 538 496 B1**
(45) Date of publication and mention of the grant of the patent: **28.12.2022**
(21) Application number: 17805114.0
(22) Date of filing: 08.11.2017
(51) Int. Cl.: C02F 11/12, C02F 11/18, C02F 11/04, F26B 3/24, F26B 17/20, B01D 1/22, C02F 11/13, C02F 11/127

(54) **A PROCESS FOR TREATING ORGANIC WASTE OR BIOMASS**
VERFAHREN ZUR BEHANDLUNG VON ORGANISCHEM ABFALL ODER BIOMASSE
PROCÉDÉ DE TRAITEMENT DE DÉCHETS ORGANIQUES OU DE BIOMASSE

(30) Priority: 08.11.2016 IT 201600112534
(43) Date of publication of application: 18.09.2019
(73) Proprietor: Vomm Impianti e Processi S.P.A., 20089 Rozzano (MI) (IT)
(72) Inventor: VEZZANI, Massimo, 20089 Rozzano (MI) (IT)
(74) Representative: Ferreccio, Rinaldo
(86) International application number: PCT/EP2017/078579
(87) International publication number: WO 2018/087133

(56) References cited:
- EP-A1- 1 601 920
- EP-A1- 2 479 145
- WO-A1-2015/126478
- US-A1- 2014 346 108

## Description

### Field of Application

The present invention relates to a process for treating organic waste or biomass.

In particular, the invention relates to a process for treating organic waste or biomass including an anaerobic digestion step, which permits to enhance biogas production yield and to obtain, downstream of the anaerobic digestion, a totally sanitized solid residue, which can be recovered for use as a fertilizer in agriculture.

### Prior Art

It is well known that anaerobic digestion is a biological process through which, in the absence of oxygen, organic substance is transformed into biogas, mainly consisting of methane and carbon dioxide. The starting organic substance can consist of animal (swine, bovine, poultry) manure, crop residues (straw, sugar beet tops etc.), agro-industrial waste (e. g. serum, vegetable waste, yeasts, sludges and effluents of distilleries and breweries), slaughterhouse waste, sewage sludge, organic fraction of organic waste and energy crops (corn, sorghum).

Anaerobic digestion is generally performed under mesophilic conditions (approximately 35°C), with residence time of 14-30 days, or thermophilic conditions (approximately 55°C), with residence time of less than 10-20 days.

Anaerobic digestion can be performed under both wet and dry conditions. Dry digestion refers to mixtures of material with at least 30% total solid content, while wet digestion refers to mixtures with at least 15% total solid content.

A waste anaerobic digestion plant generally comprises three main sections:
- a receiving and pre-treatment section, in which waste is initially stocked, before treatment and then pre-treated by breaking, by means of specific mills, the containers used for waste collection and disposal, eliminating the non-degradable fraction (metals, inerts, plastics) and homogenizing the grain size, with possible grinding.
- a substrate preparation section, in which the moisture content is adjusted by means of blenders and mixers and possible dilution with muds and water, on the basis of the total solids content envisaged for the process;
- a digestion section, comprising reactors, fed continuously or batchwise, provided with biogas collecting systems.

The biogas obtained in the process can be used to produce thermal energy by combustion in furnace, or also to produce electric energy by means of cogeneration groups.

The material exiting the digester is a liquid sludge (dry matter: 5-10%) which is not completely stabilized, since the organic matter is not completely degraded. Such material can be in part re-circulated as an inoculum and/or fluidizing agent, the remaining part is to be subjected to aerobic stabilization, and for this reason it has to be dehydrated by means of technologies such as screw press, belt press, centrifuge. The liquid fraction can be subjected to purification treatment or can be re-circulated in the digestion process. The stabilization of pressed sludge occurs through steps of accelerated bio-oxidation and post-maturation. The material stabilized in this way can be further refined for example for use in agriculture and specifically stocked.

However, it has been observed that the technologies currently used for the stabilization of the solid fraction of the anaerobic digestate not always guarantee to obtain a material ready for use as a fertilizer in agriculture, because of the presence in such material of residual moisture and undesired chemical substances and microorganisms.

Among the undesired chemical substances, the following can be mentioned: malodorous substances, sulphur (e. g. H₂S, mercaptans) and amine (e. g. methylamine) compounds and volatile organic compounds (VOC), such as e. g. volatile hydrocarbons.

Further, the material can be contaminated by microorganisms, which limit its agronomic use, included open field use. Contamination by spore-forming microorganisms, whose spores resist at temperatures even higher than 100°C, is particularly frequent. Such microorganisms have serious negative effects on operators' health and on the food cycle.

Finally, the material obtained with the current stabilization technologies has an excessive water content, which, in the presence of organic substance, implies putrescibility which limits the use of such material.

It has also been observed that anaerobic digestion, independently from the conditions under which it is performed (mesophilic or thermophilic conditions, wet or dry digestion), proves to be always incomplete, probably because the pre-treatments performed on the starting organic material before it is fed to the anaerobic digesters are not sufficient to permit an efficient attack of the anaerobic microorganisms on the cellular component of the initial organic material.

Also the purification of the separated liquid fraction is affected by the content of chemical elements which tend to concentrate in the digester and therefore in the exiting flow of sludge due to the conversion of the volatile organic compounds which result in biogas production. In particular, nitrogen organic compounds under the microbial action give rise to ammoniacal nitrogen, which is concentrated because of the above effect. This implies in the purification section a treatment step called nitrification/ denitrification which is the stronger, the heavier is the load of such element. WO 2015/126478 discloses a process for treating sludge from sewage. EP 1 601 920, US 2014/346108 and EP 2 479 145 relate to continuous reactors for treating sludge.

The present invention is aimed at providing a process for treating organic waste or biomass which overcomes the above-mentioned drawbacks.

To reach such aim, the present invention provides a process for treating organic waste or biomass according to claim 1.

Preferably, the organic waste or biomass to be thermally pretreated has a moisture content higher than or equal to 70% w/w, more preferably an average moisture content higher than 75% w/w, even more preferably an average moisture content between 75% and 95%.

Preferably, the above-mentioned pretreated organic material has a moisture content lower than or equal to 65% w/w.

The present invention relates to a process for the treatment of organic waste or biomass, which comprises steps of:
a) thermal pre-treatment of said organic waste or biomass, carried out at a temperature of at least 80°C, obtaining a pretreated organic material;
b) anaerobic digestion of said pretreated organic material, with production of biogas and of a sludgy residue;
c) separation of the sludgy residue into a liquid fraction and a solid fraction;
d) stabilization of the solid fraction, obtaining a sanitized solid fraction having a moisture content lower than or equal to 60% w/w,
characterized in that said pretreatment step a) is performed by steps of:
(v) providing a turbo-cooker, comprising a cylindrical tubular body, with heated inner wall, closed at opposite ends by endplates, provided with inlet and discharge openings and inside which there is rotatably supported a coaxial bladed rotor;
vi) feeding a continuous flow of such organic waste or biomass into the turbo-cooker, in which the bladed rotor is rotated at a speed greater than or equal to 150 rpm;
vii) centrifuging said continuous flow against the inner wall of the turbo-cooker, with formation of a fluid, tubular, thin, dynamic, highly turbulent layer, in which the particles of said organic waste or biomass advance substantially in contact with said inner wall of the turbo-cooker, heated to a temperature of at least 80°C, towards the discharge opening;
viii) discharging from the discharge opening a continuous flow of pretreated organic material and a continuous flow of water vapor. The inner wall of the cylindrical tubular body of the turbo-cooker is heated by means of a coaxial external jacket intended to be run by a heating fluid, preferably consisting of water vapor or diathermic oil or hot water.

Preferably, the organic waste or biomass to be thermally pretreated has a moisture content higher than or equal to 70% w/w, more preferably an average moisture content higher than 75% w/w, even more preferably an average moisture content between 75% and 95%

Preferably, the above-mentioned pretreated organic material, which is discharged from the above-mentioned discharge opening of the turbo-cooker, has a moisture content lower than or equal to 65% w/w.

The average residence time of the organic waste or biomass inside the turbo-cooker is preferably comprised between 1 and 12 minutes.

The temperature of the inner wall of the turbo-cooker is preferably comprised between 90°C and 130°C.

Preferably, the continuous flow of pretreated organic material exiting through the discharge opening of the turbo-cooker is fed to an apparatus for the separation of said material from vapor generated inside the turbo-cooker, before being sent to the above mentioned anaerobic digestion step b). The vapor, containing volatile chemical compounds, in particular ammonia and amines, is conveyed to a washing apparatus, which can be for example a scrubber or a washing tower.

Such volatile chemical compounds can be absorbed in said washing apparatuses by acidic aqueous solutions, preferably sulphuric acid solutions. The absorption can be pushed till obtaining a saline solution with a nitrogen concentration compatible with the commercialization as a fertilizer. Alternatively, the saline solution can be used to enrich the solid fraction before or after drying.

Advantageously, the step d) of stabilization of the solid fraction is performed also in this case by steps of:
i) providing a turbo-dryer, comprising a cylindrical tubular body, with heatable inner wall, closed at opposite ends by endplates, provided with inlet and discharge openings and inside which there is rotatably supported a coaxial bladed rotor,
ii) feeding, through the inlet opening, a continuous flow of said solid fraction into said turbo-dryer, in which the bladed rotor is rotated at a speed greater than or equal to 150 rpm;
iii) centrifuging said continuous flow against the inner wall of the turbo-dryer, with formation of a fluid, tubular, thin, dynamic, highly turbulent layer, in which the particles of said solid fraction advance substantially in contact with said inner wall of the turbo-dryer, heated to a temperature of at least 180°C, towards said discharge opening;
iv) discharging from the discharge opening a continuous flow of sanitized solid fraction having a moisture content lower than or equal to 60% w/w, preferably between 10% and 60% w/w, more preferably between 45% and 55% w/w, and a continuous flow of water vapor.

The sanitized solid fraction obtained by the process according to the present invention is totally safe from a microbiological point of view and can be used as an agricultural fertilizer. The process according to the invention results in a strong reduction of loads of microorganisms, including spore-forming organisms, reduction that could not be accomplished with the processes of the prior art and which is related to the high temperature during the stabilization of the solid fraction.

Such a strong reduction of loads of microorganisms can also be enhanced by means of the combined effect of the contact with the wall heated to a high temperature and of the high turbulence inside the turbo-dryer.

At the same time, the effect of the microbial load reduction is corroborated by the thermal pre-treatment which is carried out at a medium high temperature.

Such a strong reduction of loads of microorganisms can be even stronger when also the turbo-cooker is used to pre-treat the organic material intended for anaerobic digestion.

Moreover, the thermal pre-treatment of the starting organic material, which can be carried out in the turbo-cooker, and the stabilization of the solid fraction of the digestate, which can be carried out in the turbo-dryer, permit non only to reduce microbial load (with reduction of the load of spore-forming microorganisms by at least two magnitude orders) but also to obtain a remarkable deodorization (verifiable in terms of odor units (O.U.)), resulting from the removal of volatile organic compounds (VOC), such as hydrocarbons, and of sulphur compounds (H₂S and mercaptans), amino and ammonia compounds.

In particular, when the treatment of the starting organic material is carried out in inside the turbo-cooker, the removal of the latter compounds is even more effective and this contributes to the enhancement of the yield of the next step of anaerobic digestion, because such compounds (in particular sulphur, amino and ammonia compounds) negatively affect the activity of mesophilic and/or thermophilic microorganisms. This is increased by the effect of concentration due to the re-circulation, which usually must be remedied by supplying water.

The latter pre-treatment further causes an increase in total yield of the process of anaerobic digestion, since the intense mechanical and thermal action to which the organic material is subjected causes the lysis of the cellular material contained in it, which becomes therefore more susceptible to the attack by the mesophilic or thermophilic microorganisms used in anaerobic digesters.

At the same time, the stabilization of the solid fraction, results in a final solid fraction with a reduced moisture content, which is lower than or equal to 60% w/w, substantially non-putrescible and particularly suitable for further compacting treatment to obtain pellets or briquettes.

In particular, when the stabilization of the solid fraction is carried out in a turbo-dryer as described above, the final solid fraction thus obtained can have an even reduced moisture content, typically between 10% and 60% w/w, more preferably between 45% and 55% w/w.

In a further aspect, not according to the invention, it is herein described a solid product coming from the treatment of organic waste or biomass by anaerobic digestion, having a moisture content lower than or equal to 60%, sanitized and substantially free from spore-forming microorganisms and volatile organic compounds, obtainable by the process described above, including the step of treatment with the turbo-dryer.

The present invention will be further described referring to the attached drawing and to an explicative and non-limiting example.

### Brief Description of Drawing

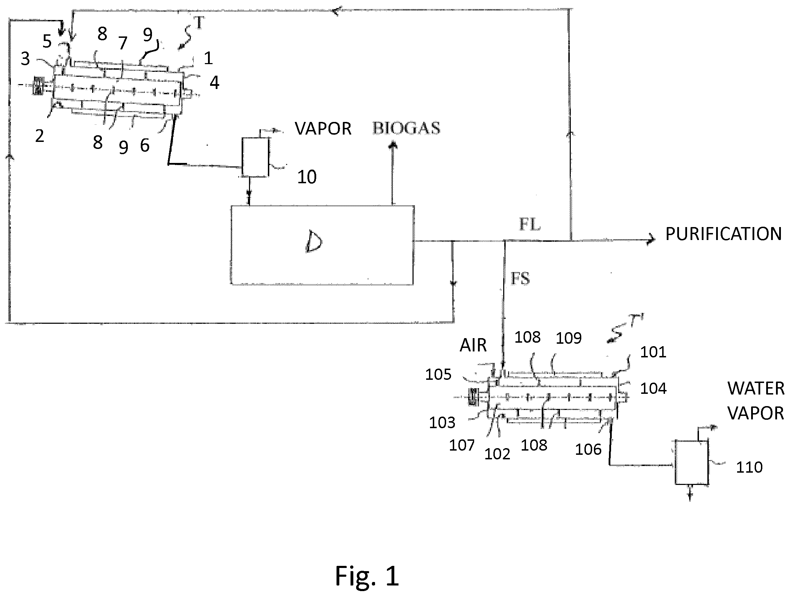

Figure 1 is a schematic representation in cross section view of a plant for the execution of the process according to the present invention, in one of its embodiments.

### Detailed Description

With regard to such figure, an apparatus for the execution of the process according to the present invention comprises a turbo-cooker T, comprising a cylindrical tubular body 1, with heatable inner wall 2, closed at opposite ends by endplates 3, 4, provided with inlet 5 and discharge 6 openings and inside which there is rotatably supported a coaxial bladed rotor 7, whose blades 8 are helicoidally arranged. Coaxially and externally to the cylindrical tubular body 1 there are disposed heating means 9, schematically represented and consisting of a coaxial external jacket intended to be run by a heating fluid, preferably consisting of water vapor or diathermic oil.

The plant also comprises an anaerobic digester D, a turbo-dryer (T'), comprising a cylindrical tubular body 101, with heatable inner wall 102, closed at opposite ends by endplates 103, 104, provided with inlet 105 and discharge 106 openings and inside which there is rotatably supported a coaxial bladed rotor 107, whose blades 108 are helicoidally arranged. Coaxially and externally to the cylindrical tubular body 101 there are disposed heating means 109, schematically represented and consisting of a coaxial external jacket intended to be run by a heating fluid, preferably consisting of water vapor or diathermic oil.

The plant can additionally comprise an apparatus 10 for the separation of the continuous flow of pretreated organic material exiting through the discharge opening 6 of the turbo-cooker T from the continuous flow of water vapor, exiting itself from such discharge opening 6. The separation apparatus 10 can for example consist in a cyclone.

A separation apparatus 110 similar to the above-mentioned separation apparatus 10 can be further envisaged, for separating the continuous flow of sanitized and dried solid fraction exiting through the discharge opening 106 of the turbo-dryer T' from the continuous flow of water vapor, exiting itself from said discharge opening 106. The separation apparatus 110 can for example consist in a cyclone.

Using the above described apparatuses, the process according the present invention, in a non-limiting embodiment, can be performed as follows.

Organic waste or biomass with an average moisture content of 75%-85%, previously reduced to pulp, are fed as a continuous flow into the turbo-cooker T, in which the bladed rotor 7 is rotated at a speed greater than or equal to 150 rpm, preferably between 200 and 400 rpm, through the inlet opening 5.

Such continuous flow of ground organic waste or biomass, thanks to the strong mechanical action exerted by the blades 8 of rotor 7, is centrifuged against the inner wall 2 of the turbo-cooker, with formation of a fluid, tubular, thin, dynamic, highly turbulent layer, in which the particles of such organic waste or biomass advance, driven by the blades 8, substantially in contact with the inner wall of the turbo-cooker, heated to a temperature of at least 80°C, typically 100°C-130°C, towards the discharge opening 6.

The kinetic energy given by the rotor blades together with the thermal energy provided by the intimate contact with the heated wall 2 of the cylindrical tubular body 1 cause the coagulation of the protein fraction of the organic waste or biomass, the total inhibition of the enzymes contained therein, the lysis of the cells contained therein as well as their partial sanitization, to which also the vapor generated inside the turbo-cooker contributes.

The helicoidal orientation of the blades 8 of rotor 7 causes the fluid, tubular, thin, dynamic and turbulent layer to be driven towards the discharge opening after an average residence time of the particles of the organic waste or biomass inside the turbo-cooker of approximately 1-12 minutes, preferably approximately 4-10 minutes.

After such time, from the discharge opening 6 a continuous flow of pretreated organic waste and biomass and a continuous flow of water vapor are discharged, which are sent to cyclone 10 in order to separate them.

The flow of vapor exiting from the cyclone can be discharged in the atmosphere or it can be condensed with conventional condensation apparatuses.

Pretreated organic waste or biomass discharged from the turbo-cooker 1 generally have a moisture content of around 60%. A continuous flow of such pretreated organic waste or biomass is fed into the anaerobic digester D and here it is subjected to anaerobic digestion, obtaining a continuous flow of biogas and a continuous flow of digestate, in form of a sludgy residue, which is separated, by means of conventional separation apparatuses, in a liquid fraction LF and a solid fraction SF. The latter is fed, as a continuous flow, into the turbo-dryer T' through the inlet opening 105 and in co-current to it a continuous flow of a gas, which can be nitrogen or air, is possibly fed, heated to a temperature of at least 200°C. The bladed rotor 107 of the turbo-dryer T' is rotated at a speed greater than or equal to 150 rpm, preferably between 200 and 400 rpm.

Such continuous flow of solid fraction, subjected to the strong mechanical action exerted by blades 108 of rotor 107, is centrifuged against the inner wall 102 of the turbo-dryer, with formation of a fluid, tubular, thin, dynamic, highly turbulent layer, in which the particles of such solid fraction advance, driven by the blades 108, substantially in contact with said inner wall of the turbo-dryer, heated to a temperature of at least 180°C, typically 240°C-280°C, towards said discharge opening 106.

The thermal energy provided by the intimate contact with the heated wall 102 of the cylindrical tubular body 1 and possibly also with the heated gas flow causes the generation of a massive amount of vapor, which is discharged together with a continuous flow of sanitized solid fraction of digestate, with an average moisture content of 10-20%.

The helicoidal orientation of blades 108 of rotor 107 causes the fluid, tubular, thin, dynamic and turbulent layer to be driven towards the discharge opening after an average residence time of the particles of the solid fraction inside the turbo-dryer of approximately 1-12 minutes, preferably 5-10 minutes, which guarantees to reach the said moisture content.

After such time, from the discharge opening 106 a continuous flow of sanitized and dried solid fraction of digestate and a continuous flow of water vapor are discharged, and then sent to cyclone 10 in order to separate them. The flow of vapor exiting from the cyclone can be discharged into the atmosphere or it can be condensed with conventional condensation apparatuses.

A part of the liquid fraction separated downstream of the digester D is resent as a continuous flow to the turbo-cooker T, through the opening 5, in co-current with the flow of organic waste or biomass fed into the turbo-cooker T.

Not according to the invention, a part of the (digested) sludgy residue exiting from the digester D is sent, before being separated in a liquid and a solid phase, as a continuous flow to the turbo-cooker T, through the inlet opening 5.

## Claims

1. A process for the treatment of organic waste or biomass, which comprises steps of:
a) thermal pre-treatment of said organic waste or biomass, carried out at a temperature of at least 80°C, obtaining a pretreated organic material;
b) anaerobic digestion of said pretreated organic material, with production of biogas and of a sludgy residue;
c) separation of the sludgy residue into a liquid fraction and a solid fraction;
d) stabilization of said solid fraction, obtaining a sanitized solid fraction having a moisture content lower than or equal to 60% w/w,
**characterized in that** said pretreatment step a) is performed by steps of:
(v) providing a turbo-cooker (T), comprising a cylindrical tubular body (1), with inner heated wall (2), closed at opposite ends by endplates (3, 4), provided with inlet (5) and discharge (6) openings and inside which there is rotatably supported a coaxial bladed rotor (7),
vi) feeding a continuous flow of said organic waste or biomass into the turbo-cooker (T), in which the bladed rotor (7) is rotated at a speed greater than or equal to 150 rpm;
vii) centrifuging said continuous flow against the inner wall (2) of the turbo-cooker (T), with formation of a fluid, tubular, thin, dynamic, highly turbulent layer, in which the particles of said organic waste or biomass advance substantially in contact with said inner wall of the turbo-cooker, heated to a temperature of at least 80°C, towards the discharge opening (6);
viii) discharging from said discharge opening a continuous flow of pretreated organic material and a continuous flow of water vapor.

2. The process according to claim 1, wherein said organic waste or biomass to be thermally pretreated has a moisture content higher than or equal to 70% w/w and said pretreated organic material has a moisture content lower than or equal to 65% w/w.

3. The process according to claim 1 or 2, wherein said inner wall (6) of the cylindrical tubular body (1) of the turbo-cooker (T) is heated by means of a coaxial external jacket intended to be run by a heating fluid, preferably consisting of water vapor, diathermic oil or hot water.

4. The process according to any one of claims 1 to 3, in which the average residence time of said organic waste or biomass inside the turbo-cooker (T) is comprised between 1 and 12 minutes.

5. The process according to any one of claims 1-4, wherein the temperature of the inner wall (6) of the turbo-cooker (T) is comprised between 90°C and 130°C.

6. The process according to any one of claims 1-5, wherein said continuous flow of pretreated organic material exiting through the discharge opening of the turbo-cooker is fed to an apparatus for the separation of said material from water vapor generated inside the turbo-cooker, before being sent to said anaerobic digestion step b).

7. The process according to any one of claims 1-6, wherein said water vapor is conveyed to a washing apparatus, in which it is treated with acidic solutions, to absorb volatile chemical compounds, in particular amine compounds and ammonia.

8. The process according to any one of claims 1-7, **characterized in that** said step d) of stabilization of said solid fraction is performed by steps of:
i) providing a turbo-dryer (T'), comprising a cylindrical tubular body (101), with heatable inner wall (102), closed at opposite ends by endplates (103, 104), provided with inlet (105) and discharge (106) openings and inside which there is rotatably supported a coaxial bladed rotor (107),
ii) feeding, through said inlet opening (105), a continuous flow of said solid fraction into said turbo-dryer, in which the bladed rotor (107) is rotated at a speed greater than or equal to 150 rpm;
iii) centrifuging said continuous flow against the inner wall (102) of the turbo-dryer (T'), with formation of a fluid, tubular, thin, dynamic, highly turbulent layer, in which the particles of said solid fraction advance substantially in contact with said inner wall (102) of the turbo-dryer, heated to a temperature of at least 180°C, towards said discharge opening (106);
iii) discharging from the discharge opening a continuous flow of sanitized solid fraction having a moisture content lower than or equal to 60% w/w, preferably between 10% and 60% w/w, more preferably between 45% and 55% w/w, and a continuous flow of water vapor.

## Patentansprüche

1. Verfahren zur Behandlung von organischem Abfall oder Biomasse, das folgende Schritte aufweist:
a) thermische Vorbehandlung des organischen Abfalls oder der Biomasse, die bei einer Temperatur von mindestens 80°C durchgeführt wird, um ein vorbehandeltes organisches Material zu erhalten;
b) anaerobe Zersetzung des vorbehandelten organischen Materials unter Erzeugung von Biogas und eines Schlammrückstands;
c) Trennung des Schlammrückstands in eine flüssige Fraktion und eine feste Fraktion;
d) Stabilisierung der festen Fraktion unter Erhalt einer sterilisierten festen Fraktion mit einem Feuchtigkeitsgehalt von weniger als oder gleich 60 Gew.-%,
**dadurch gekennzeichnet, dass** der Vorbehandlungsschritt a) durch folgende Schritte ausgeführt wird:
v) Bereitstellen eines Turbokochers (T), der einen zylindrischen rohrförmigen Körper (1) mit einer beheizten Innenwand (2) aufweist, an gegenüberliegenden Enden durch Endplatten (3, 4) geschlossen ist, mit einer Einlassöffnung (5) und einer Auslassöffnung (6) versehen ist und in dessen Innerem ein koaxialer Schaufelrotor (7) drehbar gelagert ist,
vi) Zuführen eines kontinuierlichen Stroms des organischen Abfalls oder der Biomasse in den Turbokocher (T), in dem sich der Schaufelrotor (7) mit einer Drehzahl von mehr als oder gleich 150 min⁻² dreht;
vii) Zentrifugieren des kontinuierlichen Stroms gegen die Innenwand (2) des Turbokochers (T) unter Bildung einer fluiden, rohrförmigen, dünnen, dynamischen, stark turbulenten Schicht, in der sich die Partikel des organischen Abfalls oder der Biomasse im Wesentlichen in Kontakt mit der Innenwand des Turbokochers, die auf eine Temperatur von mindestens 80°C erwärmt wird, zu der Auslassöffnung (6) hin voranbewegen;
viii) Austragen eines kontinuierlichen Stroms von vorbehandeltem organischen Material und eines kontinuierlichen Stroms von Wasserdampf aus der Auslassöffnung.

2. Verfahren nach Anspruch 1,
wobei der organische Abfall oder die Biomasse, der bzw. die thermisch vorbehandelt werden soll, einen Feuchtigkeitsgehalt von mehr als oder gleich 70 Gew.-% aufweist und das vorbehandelte organische Material einen Feuchtigkeitsgehalt von weniger als oder gleich 65 Gew.-% aufweist.

3. Verfahren nach Anspruch 1 oder 2,
wobei die Innenwand (6) des zylindrischen rohrförmigen Körpers (1) des Turbokochers (T) mittels eines koaxialen Außenmantels erwärmt wird, der für den Betrieb durch ein Heizfluid vorgesehen ist, das vorzugsweise aus Wasserdampf, diathermischem Öl oder heißem Wasser besteht.

4. Verfahren nach einem der Ansprüche 1 bis 3,
wobei die durchschnittliche Verweilzeit des organischen Abfalls oder der Biomasse im Inneren des Turbokochers (T) zwischen 1 und 12 Minuten beträgt.

5. Verfahren nach einem der Ansprüche 1 bis 4,
wobei die Temperatur der Innenwand (6) des Turbokochers (T) zwischen 90°C und 130°C liegt.

6. Verfahren nach einem der Ansprüche 1 bis 5,
wobei der kontinuierliche Strom von vorbehandeltem organischen Material, der durch die Auslassöffnung des Turbokochers austritt, einer Vorrichtung zur Trennung des Materials von Wasserdampf zugeführt wird, der innerhalb des Turbokochers erzeugt wird, bevor er zu dem anaeroben Zersetzungs-Schritt b) geschickt wird.

7. Verfahren nach einem der Ansprüche 1 bis 6,
wobei der Wasserdampf zu einer Waschvorrichtung geleitet wird, in der er mit sauren Lösungen behandelt wird, um flüchtige chemische Verbindungen, insbesondere Aminverbindungen und Ammoniak, zu absorbieren.

8. Verfahren nach einem der Ansprüche 1 bis 7,
**dadurch gekennzeichnet**, der der Schritt (d) der Stabilisierung der festen Fraktion durch folgende Schritte ausgeführt wird:
i) Bereitstellen eines Turbotrockners (T'), der einen zylindrischen rohrförmigen Körper (101) mit beheizbarer Innenwand (102) aufweist, an gegenüberliegenden Enden durch Endplatten (103, 104) geschlossen ist, mit einer Einlassöffnung (105) und einer Auslassöffnung (106) versehen ist und in dessen Innerem ein koaxialer Schaufelrotor (107) drehbar gelagert ist,
ii) Zuführen, durch die Einlassöffnung (105), eines kontinuierlichen Stroms der festen Fraktion in den Turbotrockner, in dem sich der Schaufelrotor (107) mit einer Drehzahl von größer als oder gleich 150 min⁻¹ dreht;
iii) Zentrifugieren des kontinuierlichen Stroms gegen die Innenwand (102) des Turbotrockners (T') unter Bildung einer fluiden, rohrförmigen, dünnen, dynamischen, stark turbulenten Schicht, in der sich die Partikel der festen Fraktion im Wesentlichen in Kontakt mit der Innenwand (102) des Turbotrockners, die auf eine Temperatur von mindestens 180°C erwärmt wird, zu der Auslassöffnung (106) hin voranbewegen;
iii) Austragen eines kontinuierlichen Stroms von sterilisierter fester Fraktion mit einem Feuchtigkeitsgehalt von weniger als oder gleich 60 Gew.-%, vorzugsweise zwischen 10 Gew.-% und 60 Gew.-%, weiter bevorzugt zwischen 45 Gew.-% und 55 Gew.-%, und eines kontinuierlichen Stroms von Wasserdampf aus der Auslassöffnung.

## Revendications

1. Procédé de traitement de déchets organiques ou de biomasse, lequel comprend les étapes de :
a) pré-traitement thermique desdits déchets organiques ou de ladite biomasse, réalisé à une température d'au moins 80°C, obtenant une matière organique prétraitée ;
b) digestion anaérobie de ladite matière organique prétraitée, avec production de biogaz et d'un résidu boueux ;
c) séparation du résidu boueux en une fraction liquide et une fraction solide ;
d) stabilisation de ladite fraction solide, obtenant une fraction solide assainie présentant une teneur en humidité inférieure ou égale à 60 % p/p,
**caractérisé en ce que** ladite étape de prétraitement a) est réalisée par les étapes de :
v) fourniture d'un turbo-cuiseur (T), comprenant un corps tubulaire cylindrique (1), avec une paroi intérieure chauffée (2), fermé aux extrémités opposées par des plaques d'extrémité (3, 4), muni d'ouvertures d'entrée (5) et de sortie (6) et à l'intérieur duquel un rotor coaxial à lames (7) est supporté en rotation,
vi) alimentation d'un flux continu desdits déchets organiques ou de ladite biomasse dans le turbo-cuiseur (T), dans lequel le rotor à lames (7) est mis en rotation à une vitesse supérieure ou égale à 150 tours/min ;
vii) centrifugation dudit flux continu contre la paroi intérieure (2) du turbo-cuiseur (T), avec formation d'une couche hautement turbulente, dynamique, fine, tubulaire, fluide, dans laquelle les particules desdits déchets organiques ou de ladite biomasse avancent sensiblement en contact avec ladite paroi intérieure du turbo-cuiseur, chauffée à une température d'au moins 80°C, vers l'ouverture de sortie (6) ;
viii) sortie à partir de ladite ouverture de sortie d'un flux continu de matière organique prétraitée et d'un flux continu de vapeur d'eau.

2. Procédé selon la revendication 1, dans lequel lesdits déchets organiques ou ladite biomasse à traiter thermiquement présente une teneur en humidité supérieure ou égale à 70 % p/p et ladite matière organique prétraitée présente une teneur en humidité inférieure ou égale à 65 % p/p.

3. Procédé selon la revendication 1 ou 2, dans lequel ladite paroi intérieure (6) du corps tubulaire cylindrique (1) du turbo-cuiseur (T) est chauffée au moyen d'une chemise externe coaxiale destinée à être parcourue par un fluide chauffant, de préférence consistant en vapeur d'eau, huile diathermique ou eau chaude.

4. Procédé selon une quelconque des revendications 1 à 3, dans lequel le temps de séjour moyen desdits déchets organiques ou de ladite biomasse à l'intérieur du turbo-cuiseur (T) est compris entre 1 et 12 minutes.

5. Procédé selon une quelconque des revendications 1 à 4, dans lequel la température de la paroi intérieure (6) du turbo-cuiseur (T) est comprise entre 90°C et 130°C.

6. Procédé selon une quelconque des revendications 1 à 5, dans lequel ledit flux continu de matière organique prétraitée sortant à travers l'ouverture de sortie du turbo-cuiseur est alimenté vers un appareil pour séparer ladite matière de la vapeur d'eau générée à l'intérieur du turbo-cuiseur, avant d'être envoyée vers ladite étape b) de digestion anaérobie.

7. Procédé selon une quelconque des revendications 1 à 6, dans lequel ladite vapeur d'eau est transportée vers un appareil de lavage, dans lequel elle est traitée avec des solutions acides, afin d'absorber les composés chimiques volatils, en particulier les composés d'aminés et l'ammoniac.

8. Procédé selon une quelconque des revendications 1 à 7, **caractérisé en ce que** ladite étape d) de stabilisation de ladite fraction solide est réalisée par les étapes de :
i) fourniture d'un turbo-sécheur (T'), comprenant un corps tubulaire cylindrique (101), avec une paroi intérieure (102) pouvant être chauffée, fermé aux extrémités opposées par des plaques d'extrémité (103, 104), muni d'ouvertures d'entrée (105) et de sortie (106) et à l'intérieur duquel un rotor coaxial à lames (107) est supporté en rotation,
ii) alimentation, par l'intermédiaire de ladite ouverture d'entrée (105), d'un flux continu de ladite fraction solide dans ledit turbo-sécheur, dans lequel le rotor à lames (107) est mis en rotation à une vitesse supérieure ou égale à 150 tours/min ;
iii) centrifugation dudit flux continu contre la paroi intérieure (102) du turbo-sécheur (T'), avec formation d'une couche hautement turbulente, dynamique, fine, tubulaire, fluide, dans laquelle les particules de ladite fraction solide avancent sensiblement en contact avec ladite paroi intérieure (102) du turbo-sécheur, chauffée à une température d'au moins 180°C, vers ladite l'ouverture de sortie (106) ;
iv) sortie à partir de l'ouverture de sortie d'un flux continu de fraction solide assainie qui présente une teneur en humidité inférieure ou égale à 60 % p/p, de préférence entre 10 % et 60 % p/p, plus préférablement entre 45 % et 55 % p/p, et un flux continu de vapeur d'eau.
